# EUROPEAN PATENT APPLICATION

(11) **EP 4 362 293 A1**
(43) Date of publication of application: **01.05.2024**
(21) Application number: 23204277.0
(22) Date of filing: 18.10.2023
(51) Int. Cl.: H02K 5/20, H02K 5/22

(54) **ELECTRICAL CONNECTOR AND DRAIN**

(30) Priority: 28.10.2022 US 202218050829
(71) Applicant: Rolls-Royce Corporation, Indianapolis, IN 46225-1103 (US)
(72) Inventor: HILL, Mathew, Indianapolis, 46225-1103 (US); PHELPS, Daniel Lawrence, Indianapolis, 46225-1103 (US); MUNEVAR, Erik A., Indianapolis, 46225-1103 (US)
(74) Representative: HGF

(57) **Abstract**

An electrical machine which includes a housing defining a cavity and a drain port. The housing is configured to retain a cooling fluid within the cavity. The electrical machine further includes a dual-purpose connector which includes both a drain plug configured to seal the drain port and an electrical connector configured to transfer electrical power or information to the electrical machine.

## Description

### TECHNICAL FIELD

The disclosure relates to the stator of an electrical rotating machine.

### BACKGROUND

Electrical machines may generate rotary motion from a supplied electrical power and/or generate electrical power using a supplied rotary motion. An electrical machine may include a stator and a rotor configured to rotate relative to the stator. The stator may be configured to receive electrical power and generate a magnetic field that causes the rotor to rotate (e.g., when the electrical machine acts as a motor). The stator may be configured to interact with a magnetic field to generate electrical power (e.g., when the electrical machine acts as a generator). The stator may generate heat during operation, and may be cooled by a thermal management system. Some thermal management systems include immersion of the stator in cooling fluid, which may be called a flooded stator architecture, or flow of cooling fluid through a channel or channels defined in the housing, which may be called a jacketed stator architecture.

### SUMMARY

In general, the disclosure is directed to electrical machines having a flooded stator architecture or jacketed stator architecture. More specifically, the disclosure is directed to electrical machines which have cooling fluid flowing through the electrical machine. The electrical machine includes a dual-purpose connector that is configured to function as both a drain plug and an electrical connector.

In some examples, the disclosure describes an electrical machine. The electrical machine includes a housing defining a cavity or cavities and a drain port. The housing is configured to retain a cooling fluid within the cavity. The electrical machine includes a dual-purpose connector, and the dual-purpose connector includes both a drain plug and an electrical connector configured to transfer electrical power or information to the electrical machine.

In some examples, the disclosure describes a technique for operating an electrical machine with a flooded stator architecture. The technique includes at least partially filling a cavity defined in a housing of an electrical machine with a cooling fluid. The technique also includes sealing a drain port defined by the housing with a dual-purpose connector. The dual-purpose connector includes both a drain plug and an electrical connector configured to transfer electrical power or information to the electrical machine.

### BRIEF DESCRIPTION OF THE DRAWINGS

FIG. 1 is a conceptual diagram illustrating an example vehicle in accordance with an example of the present disclosure.
FIG. 2 is a side view illustrating an example electrical machine in accordance with some examples of the present disclosure.
FIG. 3 is a conceptual cross-sectional view illustrating the example electrical machine of FIG. 2, taken along an X-Y plane in FIG. 2.
FIG. 4 is a conceptual cross-sectional view illustrating an example electrical machine in accordance with some examples of the present disclosure.
FIG. 5 is a conceptual cross-sectional view illustrating a portion of an example electrical machine which includes a dual-purpose connector according to some examples of the present disclosure.
FIG. 6 is a conceptual cross-sectional view illustrating a portion of an example electrical machine which includes a dual-purpose connector according to some examples of the present disclosure.
FIG. 7 is a conceptual cross-sectional view illustrating a portion of an example electrical machine which includes a dual-purpose connector according to some examples of the present disclosure.
FIG. 8 is a conceptual cross-sectional view illustrating a portion of an example electrical machine which includes a dual-purpose connector, according to some examples of the present disclosure.
FIG. 9 is a flowchart illustrating examples techniques for operating an electrical machine with a flooded stator architecture, according to some examples of the present disclosure.

### DETAILED DESCRIPTION

The disclosure describes devices, assemblies, systems, and techniques for electrical machines which include a flooded stator architecture or jacketed stator architecture. While desirable for thermal management, flooded stator architectures or jacketed stator architectures may be relatively complex in that the electrical machine may include components to supply and contain cooling fluid flowing through the electrical machine during operating of the electrical machine to remove heat generated during operation of the electrical machine. In some examples, the electrical machine may be a motor or generator that is part of a vehicle. Vehicles which include an electrical machine having a flooded stator or jacketed stator architecture may require changing cooling fluid that may be retained within a cavity and surrounded by a housing (e.g., because the cooling fluid may become contaminated or break down over time). The cooling fluid may be contained within a housing, and the housing may define one or more stator cavities which are configured to retain cooling fluid.

Maintenance of an electrical machine having a flooded stator or jacketed stator architecture may be difficult relative to electrical machines which do not include cooling fluid flowing through the electrical machine. For example, where the vehicle is an aircraft, volume and weight considerations may require that the electrical machine is located in a cramped or small space and with as few connecting pipes and wires as possible, limiting access to the electrical machine for maintenance. Since access for maintenance may be limited in this way, the electrical machine may need to be removed from the vehicle (e.g., taken off the wing of an aircraft) to perform maintenance tasks (e.g., removing and replacing the cooling fluid from the cavity). Disassembly of the housing or siphoning of the cooling fluid out of the housing to change the cooling fluid on-wing may result in increased physical work and time required to perform the task. Such increases in work may undesirably reduce aircraft dispatch rates.

In accordance with one or more aspects of this disclosure, an electrical machine may include a dual-purpose connector that functions as both an electrical connector and a drain plug. For instance, the dual-purpose connector may enable the transfer of electrical power or information between the electrical machine and external devices, and, when removed, enable draining of cooling fluid from the electrical machine. Such a dual-purpose connector may provide one or more advantages. As one example, the dual-purpose connector may enable changing of the cooling fluid while the electrical machine remains "on wing" (e.g., by disconnecting the drain plug of the dual-purpose connector from a drain port defined by the housing, and gravity draining the cooling fluid). As another example, integration of draining functionality into an electrical connector on the housing of the electrical machine may allow for a single feature, the dual-purpose connector, to function as both a drain port and as an electrical connector. The resulting combined electrical connector and drain may result in an elegant electrical machine which may be compact and robust through the elimination or minimization of additional components and/or connection points.

In some examples, cooling fluid may be supplied through a cooling fluid supply channel in the dual-purpose connector, which may allow further benefits to be realized. For example, cooling benefits to other components of the electrical machine may be gained, such as to electrical harnesses. Additionally, or alternatively, the amount of insulation for electrical cabling may be reduced because the local temperature may be lower due to the introduction of coolant directly through the electrical harness or harnesses.

As discussed above, the electrical machine may be part of a vehicle. In some examples, the vehicle may be an aircraft, and the electrical machine may be configured to be mounted on the wing of the aircraft. The housing of the electrical machine may retain cooling fluid such that the stator may be immersed in cooling fluid (i.e. a "flooded stator" architecture), or the housing may define one or more channels configured to flow cooling fluid around the stator to remove heat (i.e. a "jacketed stator" architecture). Mounted on the aircraft, the housing may define a gravity bottom, which may be a point at the bottom of the housing defined relative to a gravitational force. The housing may also define a gravity top opposite the gravity bottom relative to the direction of the gravitational force. Although the drain port may be defined by the housing in any suitable location, it may be desirable to locate the drain port closer to the gravity bottom than to the gravity top, such that gravity may assist in draining the cooling fluid from the cavity. In some examples, the drain port may be defined by the housing at the gravity bottom of the housing, such that the cavity may completely or nearly completely empty of cooling fluid by gravity when the dual-purpose connector is disconnected. The drain port defined near the gravity bottom of the housing may allow for complete or nearly complete changing of the cooling fluid, because the cavity can completely or nearly completely empty before being filled with fresh cooling fluid. In some examples, the vehicle may be an airplane, and the electrical machine may be an electrical propulsion unit ("EPU").

The electrical connector of the dual-purpose connector may be any suitable electrical connector which is capable of transferring electrical power or information to the electrical machine. For example, the electrical connector may be a receptacle configured to receive a supply of electrical power (e.g., alternating current) from an external source (e.g., the electrical power to be converted into rotational mechanical energy by the electrical machine). Additionally or alternatively, in some examples the electrical connector may be connected to a sensor or other electrical component utilizing an electrical harness or cable to transfer information to and/or away from the electrical machine from another part of a system. For instance, the electrical connector may be connected to a temperature sensor within the electrical machine and may transfer signals from the temperature sensor to an external controller of the electrical machine. In some examples, it may be desirable to integrate the drain plug into the alterative current ("AC") connector to form the dual-purpose connector, because the AC connector may safely be removed from the dual-purpose connector during a maintenance outage, the remaining drain plug may be removed to drain the housing of cooling fluid.

The drain plug of the dual-purpose connector may be configured to connect to the drain port defined by the housing in any suitable manner that allows for both sealing of the drain port and for electrical connection to the housing of the electrical machine. It may be advantageous to releasably secure the drain plug of the dual-purpose connector to the drain port defined by the housing, such that the drain plug may quickly and easily connect to and disconnect from the housing. For examples, the dual-purpose connector may be threadably connected to the drain port, friction fit to the drain port, connected via connector lugs and sealing gaskets or O-rings, or the like. In some examples, the drain plug and drain port may be configured to threadably connect. The drain plug may be configured to threadably disconnect from the drain port defined in the housing to allow the cooling fluid to drain from the cavity.

In some examples, the electrical connector may be connected to a pre-loaded intermediate plate which functions as the drain plug of the dual-purpose connector. The intermediate plate may be combined with a jam nut to secure and connect the electrical connector to the intermediate plate. In these examples, the electrical cable may be removed from the electrical connector of the dual-purpose connector prior to disconnecting the intermediate plate from the drain port, for electrical safety. A wave spring may apply a pre-load to the intermediate plate, and the jam nut may control the magnitude of the pre-load force established. In examples where the dual-purpose connector includes a pre-loaded intermediate plate, one or more connector lugs of the dual-purpose connector may remain stationary while the intermediate plate separates from the drain port, which may minimize or reduce fatigue and wear in the connection and surrounding insulation. In some examples, inner and outer O-rings may seal the intermediate plate while the intermediate plate is in the closed (non-draining) position. The inner and outer O-rings may be moved into the open (draining) position, allowing cooling fluid to exit the drain port or ports in the housing. In some examples, the housing may be conductive, and may be grounded. The cooling fluid drain, or bleed, may be managed with other features and components of the electrical machine described elsewhere herein. Furthermore, the electrical machine may include features and components discussed elsewhere herein which assist in evacuating air from the cooling fluid system, such that air bubbles are not trapped within the cavity during operation of the electrical machine.

In some examples, the dual-purpose connector may include a piston seal. In such examples, the piston seal may control and manage a radial sealing interface between the dual-purpose connector and the drain port defined by the housing of the electrical machine. In such examples, a wave spring may apply a pre-load to the piston seal, and a jam nut may optionally control the magnitude of the pre-load force established. As discussed above with respect to the intermediate plate example, one or more connector lugs may remain stationary, thus reducing fatigue and wear in the connection and insulation. The dual-purpose connector may be configured to pass by a shoulder on the housing to change from a closed position, in which cooling fluid is sealed within the cavity, to an open position, where cooling fluid may escape the cavity through the drain port. Grounding may be improved in examples in which the housing is conductive, because the contact area with the housing may be larger.

In some examples, the dual-purpose connector may define a cooling fluid channel. Cooling fluid may be supplied to the cavity through the cooling fluid channel during operation of the electrical machine, drained from the cavity through the cooling fluid channel during a maintenance period, or both. The cooling fluid channel may be part of a thermal management system that circulate cooling fluid through the cavity and one or more heat exchangers during operation of the electrical machine. In some examples, the cooling fluid channel may pass across a seal defined by the interface between the drain plug and drain port.

In some examples, the electrical connector of the dual-purpose connector may be configured to connect to an electrical cable or harness by a spring connection. In such examples, spring contacts may allow for relatively simple insertion and removal of a harness from the dual-purpose connector without interfering with stator insulation or lug connections. As such, the dual purposes of electrical connection and removable sealing of the drain port may be accomplished. In some examples, the electrical connection may be independently removed from the drain plug, such that the dual-purpose connector may be disassembled into independent electrical connector and drain plug component parts. In this way, in some examples, electrical connection may be severed by removal of the electrical connector while the cavity remains sealed by the drain plug. Alternatively, in some examples the electrical connector and drain plug may be formed integrally such that the dual-purpose connector is a single piece.

In some examples, the drain plug may be connected to the drain port by threads, or by a living spring in the torsional setting, or the like. The electrical connector may be connected to the drain plug (to form the dual-purpose connector), and thus to the housing, by a contact joint in the harness connector that may be engaged or disengaged for removal. In some examples, connection of the electrical connector to the drain plug may require additional tooling. In some examples, a jug may be integrated into the housing to accommodate one or more additional sensors that may be present, for example in a testing configuration.

In some examples, a cooling fluid channel may be defined in the drain plug or connector jug of the dual-purpose connector. The cooling fluid channel may be configured to be plugged or blocked by an electrical harness connector or by another device. Spring contacts may facilitate the use of hollow cabling. Hollow cabling may be capable of transferring cooling fluid to and from the cavity. As such, examples which use spring contacts may provide both electrical and cooling fluid connections to the electrical machine without interfering with the functionality of either interface. The cooling flow channel may be used during maintenance to bleed the thermal management system.

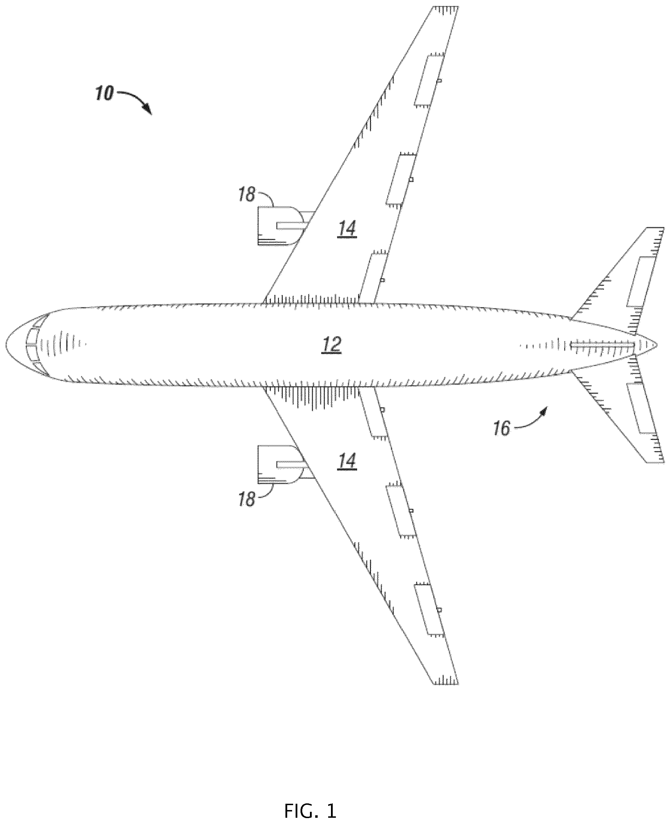

FIG. 1 is a conceptual diagram illustrating an example vehicle in accordance with an example of the present disclosure. In some examples, the vehicle includes an aircraft 10. In other examples, the vehicle may include any type of gas turbine engine powered vehicle, including one or more types of air vehicles; land vehicles, including but not limited to, tracked and/or wheeled vehicles; marine vehicles, including but not limited to surface vessels, submarines, and/or semi-submersibles; amphibious vehicles; or any combination of one or more types of air, land, and marine vehicles. The vehicle may be manned, semiautonomous, or autonomous.

Aircraft 10 includes a fuselage 12, wings 14, an empennage 16, two propulsion units 18A and 18B (collectively, "propulsion units 18"). In some examples, propulsion units 18 may be mounted on wings 14. As illustrated in FIG. 1, aircraft 10 is a twin-engine turbofan aircraft. In some examples, aircraft 10 may be any type of aircraft, including fixed-wing aircraft, rotorcraft, tilt rotors, and the like. Propulsion units 18 may be any type of propulsion unit, including turbine (e.g., turbofan, turbojet, turboprop), piston, electrical, and the like. Although illustrated as two propulsion units 18 mounted on two wings 14, other configurations are considered. Aircraft 10 may employ any number of wings 14. Empennage 16 may employ a single or multiple flight control surfaces. In some examples, propulsion units 18 may be the main propulsion systems of aircraft 10. In some examples, aircraft 10 may be at least partially electrically driven, such as through a hybrid-electric propulsion system (e.g., series, parallel, or combination series/parallel configurations), in which propulsion units 18 may include one or more EPUs.

One or more of propulsion units 18 may include an electrical machine. In accordance with one or more aspects of this disclosure, the electrical machine may include a dual-purpose connector.

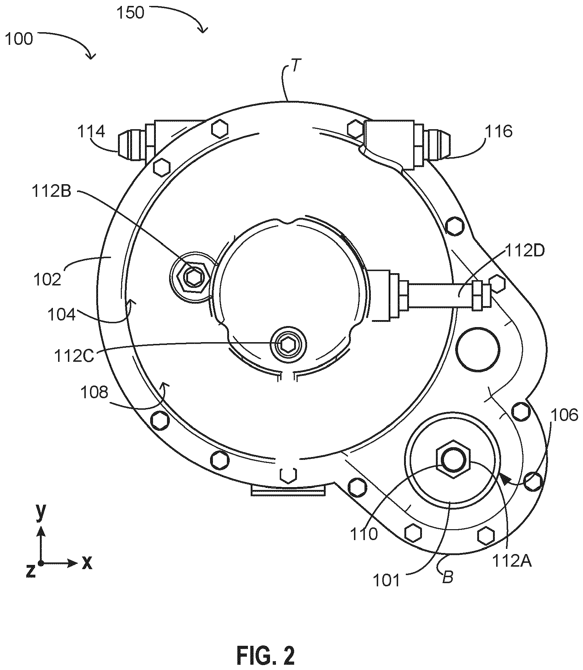

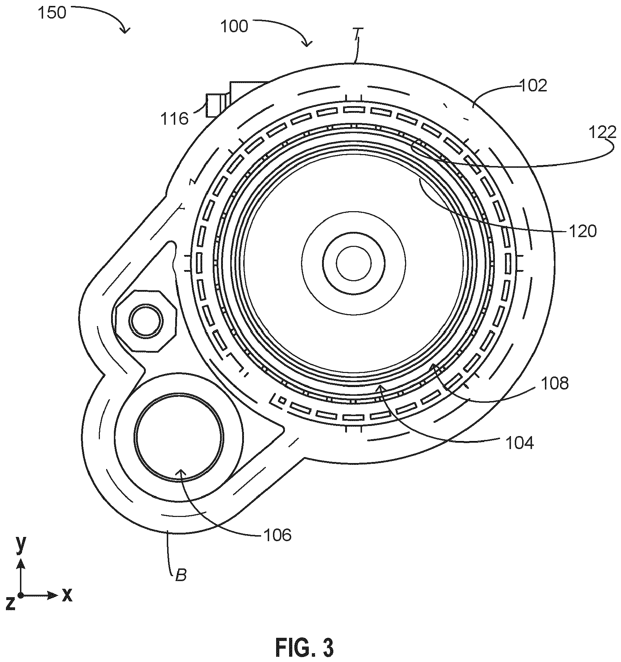

FIGS. 2 and 3 illustrate example electrical machine 100. In some examples, electrical machine 100 may be a part of a vehicle, such as aircraft 10 of FIG. 1. In some examples, electrical machine may be configured to be mounted on wing 14 of aircraft 10. In some examples, electrical machine 100 is an electric propulsion unit (EPU) configured to propel an aircraft. FIG. 2 is a side view illustrating an example electrical machine 100, while FIG. 3 is a conceptual cross-sectional view illustrating electrical machine 100 of FIG. 2, taken along an X-Y plane in FIG. 2.

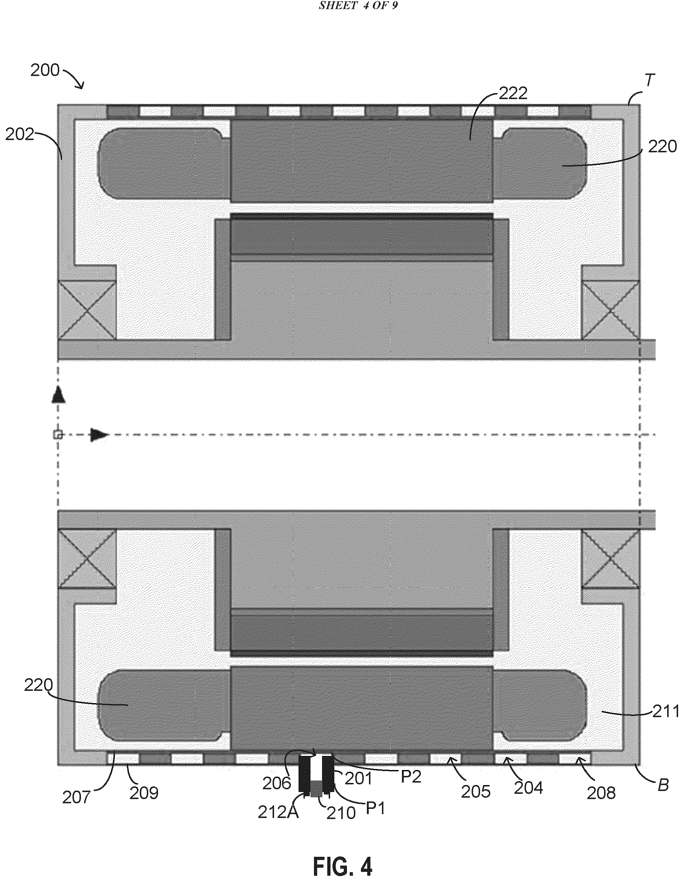

Electrical machine 100 includes housing 102, which is configured to at least partially surround internal components and to define cavity 104. Electrical machine 100 of FIGS. 2 and 3 has a flooded stator architecture, such that cavity 104 contains stator 120. As will be discussed below with respect to FIG. 4, jacketed stator architectures are also considered. Housing 102 forms a temperature resistant and robust casing around stator 120, and may include any suitable material of construction, such as a metal or metal alloy. In examples where housing 102 includes a conductive material of construction, typical techniques for grounding electrical machine 100 may be employed. In some examples, electrical machine 110 may be configured to act in operation as a motor, a generator, or both.

In some examples, housing 102 may be configured to completely define cavity 104 by forming a two-piece "clamshell" around cavity 104, containing stator 120 inside cavity 102 such that when cavity 104 is filled with cooling fluid 108, cooling fluid 108 may directly contact stator 120 to remove heat from stator 120. In some examples, housing 102 may be substantially sealed (e.g., sealed or nearly sealed) such that cavity 104 may be filled with cooling fluid 108, which may be under pressure and circulated within thermal management system 150, of which electrical machine 100 may be a part. Housing 102 may, in some examples, include alignment features 122, which may be include one or more of a lip, protrusion, edge, or the like, which may extend into cavity 104 from housing 102 and function to position and hold stationary internal components (e.g., stator 120) of electrical machine 100.

Housing 102 may include a plurality of electrical connectors 112A, 112B, 112C, 112D ("electrical connectors 112") on the exterior of housing 102 configured to transfer electrical power or information to electrical machine 100. Electrical connectors 112 may receptacles configured to connect to sensors, and thus be configured to relay information about a condition or conditions of electrical machine 100 to a controller (not illustrated) or computing system (not illustrated). For example, electrical connectors 112 may be connected to an accelerometer, a resolver connector, a temperature sensor connector, or the like. Electrical connector 112A may be a receptacle configured to receive or supply power to or from the electrical machine 100, and may in some examples function as an AC connector. As briefly mentioned above, the exterior perimeter of housing 102 may include a number of electrical connectors 112, which may include wired connections, in a compact space and specifically located to determine conditions of electrical machine 100. As such, it may not be desirable to dedicate a space on the exterior of housing 102 for a drain feature. Inclusion of a drain plug 110 which includes an electrical connector 112A, where the combination of drain plug 110 and electrical connector 112A can be called dual-purpose connector 101, may thus allow for draining of electrical machine 100 without addition of a dedicated feature on housing 102. As illustrated in FIG. 2, dual-purpose connector 101 includes electrical connector 112A, which is an AC power connector. It may be desirable to integrate drain plug 110 into alternating current ("AC") connector 112A to form dual-purpose connector 101, because the AC connector may safely be removed during a maintenance outage when drain plug 110 is disconnected and/or removed from drain port 106.

Cavity 104 may be a void volume within housing 102 configured to retain cooling fluid 108 in contact with internal components such as stator 120, such that heat generated by the internal components of electrical machine 100 during operation of electrical machine 100 may be transferred to cooling fluid 108. Housing 102 may define drain port 106, which may be an aperture through housing 102 which fluidically connects cavity 104 to the exterior surroundings of electrical machine 100. In some examples, drain port 106 may be configured to receive and interface with drain plug 110 of dual-purpose connector 101 such that drain plug 110 and drain port 106 form a seal. For example, drain port 106 may be configured to receive and interface with drain plug 110 by defining matching contact surfaces, threads, or the like.

Dual-purpose connector 101 includes drain plug 110. Drain plug 110 is configured to plug drain port 106 during operation of electrical machine 100 to retain cooling fluid 108 within cavity 104. In some examples, drain plug 110 may be configured to friction fit within drain port 106 to interface with drain port 106. In such examples, dual purpose connector 101 may define drain plug 110 at one end which is configured to act as a stopper in drain port 106. Alternatively, drain plug 110 may define threads on an outer perimeter of dual-purpose connector 101 which may be configured to mate with threads on drain port 106 such that drain plug 110 is configured to threadably connect to drain port 106 to seal cavity 104. Stated similarly, in some examples drain plug 110 may be defined by the outer perimeter of dual-purpose connector 101 such that all of dual-purpose connector 101 is removed from drain port 106 when drain plug 110 is removed from drain port 110

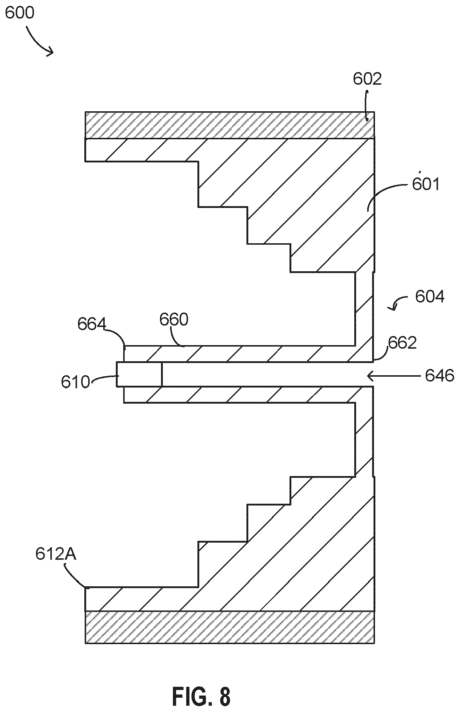

Alternatively, in some examples, as best illustrated in FIG. 8 below, dual-purpose connector 101 may be configured to permanently fit within drain port 106, and drain plug 110 may seal a cooling fluid channel that passes through dual-purpose connector 101 to fluidically connect cavity 104 to the external surroundings of housing 102. Stated similarly, in some examples drain plug 110 may be removed from drain port 106 by only removing a portion of dual-purpose connector 101.

Dual-purpose connector 101 also includes electrical connector 112A. Electrical connector 112A is configured to transfer electrical power or information between the electrical machine 100 and other devices/systems. In some examples, as mentioned above, electrical connector 112A and drain plug 110 may be formed integrally to define dual-purpose connector 101. Alternatively, electrical connector 112A and drain plug 110 may be joined to form dual-purpose connector 101 as a permanent assembly. Still other options include releasably securing electrical connector 112A to drain plug 110 to form dual-purpose connector 101 in a way that allow dual-purpose connector 101 to be disassembled, as will be discussed in detail below.

Drain port 106 is an aperture defined by housing 102 such that cavity 104 is fluidically connected to the surroundings of electrical machine 100 when dual-purpose connector 101 is disconnected from drain port 106. In some examples, drain port 106 may be a machined hole in housing 102. Although discussed herein as a single aperture, in some examples drain port 106 may include more than one aperture in housing 102. In some examples, more than one apertures may connect to one or more cavities 104 defined by housing 102, such as a first cavity and a second cavity. Drain port 106 may be defined in any suitable location on the perimeter of housing 102. In some examples, housing 102 may define an orientation with respect to a gravitational force when electrical machine 100 is mounted on the wing (14, FIG. 1) of an aircraft (10, FIG. 1). For example, the gravitational force may define a direction toward the bottom of the page in the y-direction. As such, housing 102 may define a gravity top *T* and a gravity bottom *B* when mounted on the wing (14, FIG. 1) relative to the force of gravity, and drain port 106 may be defined in a position on housing 102 that is closer to the gravity bottom *B* than gravity top *T* (e.g., at the gravity bottom *B*). As such, the drain port may be located on housing 102 to improve drainage when drain plug 110 of dual-purpose connector 101 is disconnected from drain port 106. In this way, dual-purpose connector 101 may be configured to allow for changing the cooling fluid 108 while the electrical machine 100 is mounted on wing 14 (FIG. 1) of aircraft 10 (FIG 1).

In some examples, electrical machine 100 includes cooling fluid inlet port 114 and cooling fluid outlet port 116, which may be apertures in housing 102 which fluidically couple cavity 104 to other parts of thermal management system 150, such as one or more heat exchangers (not illustrated). In some examples, cooling fluid inlet port 114 and cooling fluid outlet port 116 may be different from drain port 106. Hence, thermal management system 150 may circulate cooling fluid 108 into cavity 104 through cooling fluid inlet port 114. Inside cavity 104, cooling fluid 108 may be heated by operation of electrical machine 100. Heated cooling fluid 108 may exit cavity 104 through cooling fluid outlet port 116. In some examples, cooling fluid inlet port 114 and cooling fluid outlet port 116 are closer to gravity top *T* than gravity bottom *B.* In this way, cavity 104 may be completely filled through cooling fluid inlet port 114 before cooling fluid 108 exits cooling fluid outlet port 116, thus allowing cavity 104 to be filled substantially free of air bubbles (e.g., free or nearly free) with cooling fluid 108 when drain plug 110 of dual-purpose connector 101 seals drain port 106.

Cooling fluid 108 is configured to circulate through thermal management system 150 to remove heat from electrical machine 100. In some examples, cooling fluid 108 may circulate through thermal management system 150 at a flowrate of about 1 liter per minute (L/min) to about 200 L/min, such as about 10 L/min to about 50 L/min. The pressure of cooling fluid 108 within cavity 104 during operation of electrical machine 100 may, in some examples, be about 1 pounds per square inch of gauge pressure (psi_{g}) to about 30 psi_{g}, such as about 3 psi_{g} to about 15 psi_{g}.

Cooling fluid 108 is configured to transport energy as heat through thermal management system 150. In some examples, cooling fluid 108 may be configured to remain in a liquid state throughout thermal management system 150. Cooling fluid 108 may include any suitable liquid, including one or more of an engine oil, mineral oil, water, turbine fluid, air, or the like. In some examples, cooling fluid 108 may be configured to changes physical state during a cycle, such as heating from a liquid to a gas within cavity 104, then condensing elsewhere in thermal management system 150. In these examples, cooling fluid 108 may include a refrigerant.

Electrical machine 100 includes dual-purpose connector 101 which includes drain plug 110 and electrical connector 112A so that a single component mounted on housing 102 functions as both an electrical connector which transfers electrical power or information to the electrical machine and also functions as a drain plug to releasably seal drain port 106 during operation of the electrical machine. Electrical machine 100 may thus undergo a change of cooling fluid 108 on wing by disconnecting drain plug 110 of dual-purpose connector 101 from drain port 106 defined by housing 102, and draining cooling fluid 108. In some examples, integration of draining functionality into electrical connector 112A that is already present on housing 102 as an AC connector may provide an elegant solution. Combined as such, electrical machine 100 may be compact and robust through the elimination or minimization of additional components and/or connection points.

FIG. 4 is a conceptual cross-sectional view illustrating example electrical machine 200. Electrical machine 200 may be generally described similarly as electrical machine 100 of FIGS. 2 and 3, differing as described below, where similar reference numbers indicate similar elements. Electrical machine 200 illustrates a jacketed stator architecture.

In the jacketed stator architecture of electrical machine 200, cooling fluid 208 may fill cavity 204 defined by housing 202. Rather than directly contacting stator 220, cavity 204 is defined as one or more channels 205 (e.g., helical channels in the illustration of FIG. 4) between interior surface 207 and exterior surface 209 of housing 202. As such, cooling fluid 208 is configured to flow within the wall of housing 202 between, passing closely enough to stator 220 to absorb and remove heat generated by stator 220 during operation of electrical machine 200 without immersing stator 220 in cooling fluid 208.

Housing 202 of electrical machine 200 defines drain port 206 in exterior surface 209. Drain port 206 is configured to fluidically couple cavity 204 (one or more channels 205 in this example) to the surroundings of housing 202. Interior surface 207 of housing 202 is a solid surface, such that drain port 206 does not fluidically connect interior cavity 211 to the surroundings of housing 202. Thus, interior cavity 211 remains dry (i.e., not filled by cooling fluid) during operation of electrical machine 200, which may be desirable in examples where cooling fluid 208, stator 220, or other internal components of electrical machine 200 may experience reduced useful life if exposed to each other.

Electrical machine 200 includes dual-purpose connector 201, which includes drain plug 210 and electrical connector 212A. Dual-purpose connector 201 defines perimeter P1, which is an outer boundary configured to substantially mirror the dimensions of drain port 206, which may be a machine hole in exterior surface 209 of housing 202, such that dual purpose connector plugs and seal seals drain port 206 when electrical machine 200 is in operation. In some examples, dual-purpose connector 201 may be removed from housing 202 to drain cooling fluid 208 from cavity 204 defined by one or more channels 205. In such examples, drain plug 210 of dual-purpose connector 201 may be considered the entire dual-purpose connector 201 (including the portion of dual-purpose connector 201 illustrated in black in FIG 4). Alternatively, rather than completely removing dual-purpose connector 201, in some examples, as illustrated in FIG. 4, drain plug 210 (illustrated in gray) may be a separable component that is removed from dual-purpose connector 201 to drain cooling fluid 208 from electrical machine 200, as will be further described with respect to FIG. 8 below.

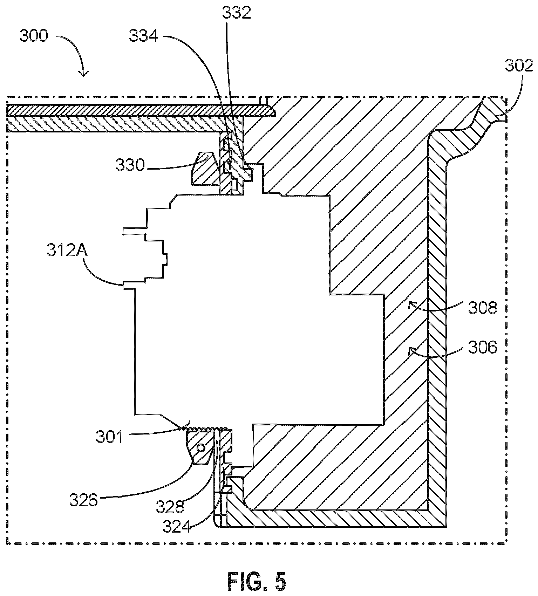

FIG. 5 is a conceptual cross-sectional view illustrating a portion of example dual-purpose connector 301. Dual-purpose connector 301 includes intermediate plate 324, which functions as a drain plug, and electrical connector 312A. Electrical machine 300 may be generally described similarly to electrical machine 300 of FIG. 1, differing as described below, where similar reference numbers indicate similar elements.

In some examples, housing 302 is connected to dual-purpose connector 301 by the edges of intermediate plate 324 which may span across and extend beyond the aperture defined by drain port 306. Intermediate plate 324 may be pre-loaded and held in place by jam nut 326, which may secure and connect dual-purpose connector 301 to drain port 306 defined by housing 302. Wave spring 328 may apply the pre-load to intermediate plate 324, and jam nut 326 may be configured to control the magnitude of the pre-load force established. Connector lug 330 may remain stationary during connection and disconnection of intermediate plate 324, which may minimize or reduce fatigue and wear on electrical connector 312A and the surrounding insulation while intermediate plate 324 separates electrical connector 312A from housing 302. In some examples, inner O-ring 332 and outer O-ring 334 may seal intermediate plate 324 while intermediate plate 324 is in the closed (non-draining) position, as illustrated. The inner and outer O-rings may be moved into the open (draining) position, allowing cooling fluid to exit drain port 306 during a maintenance cycle. In some examples, the cooling fluid drain, or bleed, may be managed with other features and components of the electrical machine.

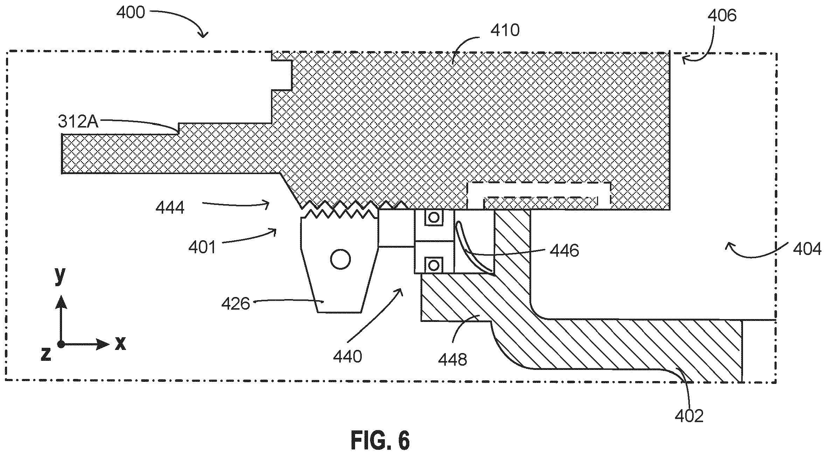

FIG. 6 is a conceptual cross-sectional view illustrating a portion of example electrical machine 400. Electrical machine 400 may generally be described similarly to electrical machine 100 as described with respect to FIG. 2 and FIG. 3, differing as described below. Electrical machine 400 includes dual purpose connector 401, which includes piston seal 440. Dual-purpose connector 401 and drain port 406 of housing 402 are connected via piston seal 440.

Piston seal 440 of dual-purpose connector 401 may control and manage a radial sealing interface 444 between drain plug 410 and drain port 406 of housing 402. In some examples, wave spring 346 may apply a pre-load to piston seal 440, of which jam nut 426 manages the magnitude of the pre-load force established. Piston seal 440 may be configured to pass by shoulder 448 on housing 402 to change from a closed position to an open position. In the closed position, as illustrated, cooling fluid (108, FIGS. 2 and 3) is retained within cavity 404. Conversely, when piston seal 440 is in the open position, cooling fluid (108, FIGS. 2 and 3) may escape cavity 404 through drain port 406.

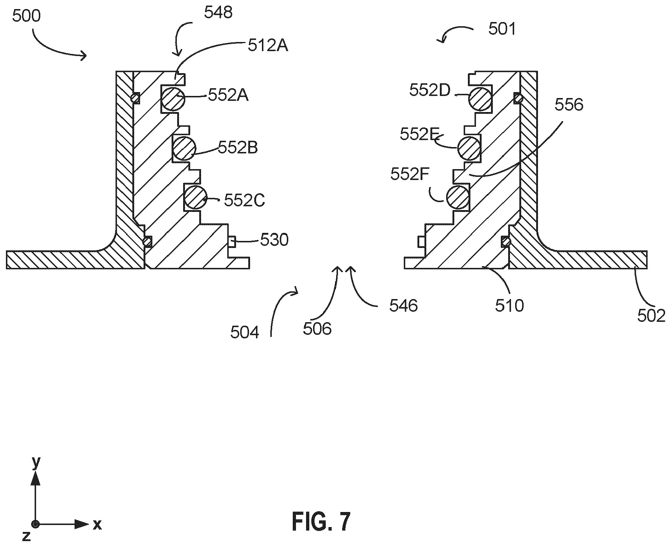

FIG. 7 is a conceptual cross-sectional view illustrating a portion of an example electrical machine 500. Electrical machine 500 may generally be described as electrical machine 100 with respect to FIGS. 2 and 3 above, differing as described below. FIG. 6 is a cross-sectional view of dual-purpose connector 501 take along a central axis of dual-purpose connector 501.

Dual-purpose connector 501 includes drain plug 510 and electrical connector 512A. Dual purpose connector 501 defines cooling fluid channel 546 passing through dual-purpose connector 501. Cooling fluid channel 546 is configured to fluidically couple cavity 504 with the surroundings of electrical machine 500.

In some examples, electrical connector 512A maybe a spring connection 548 included on dual-purpose connector 501. In some examples, spring connection 548 may define spring contacts 552A, 552B, 552C, 552D, 552E, 552F (collectively, "spring contacts 552"), which may allow for relatively simple insertion and removal of dual-purpose connector 501 without interfering with stator insulation or lug connections. In some examples, electrical connector 512A may be independently removed from drain plug 510, such that the dual-purpose connector 501 may be disassembled, and the electrical connection can be severed while the cavity 504 remains sealed by drain plug 510. For example, drain plug 510 may be connected to the drain port 506 by threads, or by a living spring in the torsional setting, or the like. Electrical connector 512A may be connected to drain plug 510 to form dual-purpose connector 501. Thus, electrical connector 512A may be connected to housing 502 by a contact joint in the harness connector that may be engaged or disengaged for removal.

In some examples, connection of the electrical connector 512A to drain plug 510 may require additional tooling. In some examples, jug 556 may be integrated into housing 402 to accommodate one or more additional electrical connectors (112, FIG. 2) that may be present, for example in a testing configuration. In some examples, cooling fluid channel 546 may be defined in drain plug 510 and connector jug 556 of dual-purpose connector 401. Cooling fluid channel 546 may be configured to be plugged or blocked by a plug, an electrical harness connector, or by another device. Spring contacts 552 may facilitate the use of hollow cabling. Hollow cabling may, in some examples, be capable of transferring cooling fluid (108, FIG. 2) to and from cavity 404. As such, examples which use spring contacts 552 may allow for electrical and cooling fluid connections to the electrical machine without interfering with the functionality of either interface. Cooling fluid channel 546 may be used during maintenance to bleed the thermal management system (150, FIG. 2).

In some examples, the spring connection 548 may be a canted coil spring. For instance, the spring connection 548 may be a slanted, circular spring that produces a flat load curve when compressed. Examples where spring connection 548 includes a canted coil spring may be advantageous for one or more of latching, locking, holding, and/or quick-release performance.

FIG. 8 is a conceptual cross-sectional view illustrating a portion of example electrical machine 600. Electrical machine 600 includes dual-purpose connector 601, which may generally be described as dual-purpose connector 501 of FIG. 7, differing as described below, where similar reference numbers are used to call out similar elements. Dual-purpose connector 601 includes cooling fluid channel 546, which is defined by dual-purpose connector 601. In some examples, cooling fluid (108, FIG. 1) may be supplied through cooling fluid supply channel 646 in dual-purpose connector 601, which may allow further benefits to be realized. For example, cooling benefits to other components of the electrical machine may be gained, such as to electrical harnesses, because the electrical harness or harness connected to dual-purpose connector 601 may be in contact with cooling fluid away from electrical machine 600. Additionally, or alternatively, the amount of insulation for electrical cabling may be reduced because the local temperature may be lower due to the introduction of cooling fluid directly through the electrical harness or harnesses.

In some examples, cooling fluid supply channel 646 may be defined inside tube 660. Tube 660 may extend from a first end 662 which may fluidically connect to cavity 604 to a second end 664 which may fluidically connect to the surroundings of electrical machine 500. In some examples, tube 660 may be longer dual-purpose connector 601 in the local region of second end 664. Tube 660 may be sealed at second end 664 by drain plug 610, which in some examples may be a part of an electrical harness. Configured in this way, cavity 604 may be drained or bled at dual-purpose connector 601 by removing drain plug 610, and the extra length of tube 660 may allow for management of draining cooling fluid. As such, dual-purpose connector 601 may be configured to not require complete removal of the entire dual-purpose connector 601 from housing 602 while draining electrical machine cavity 604 to change the cooling fluid.

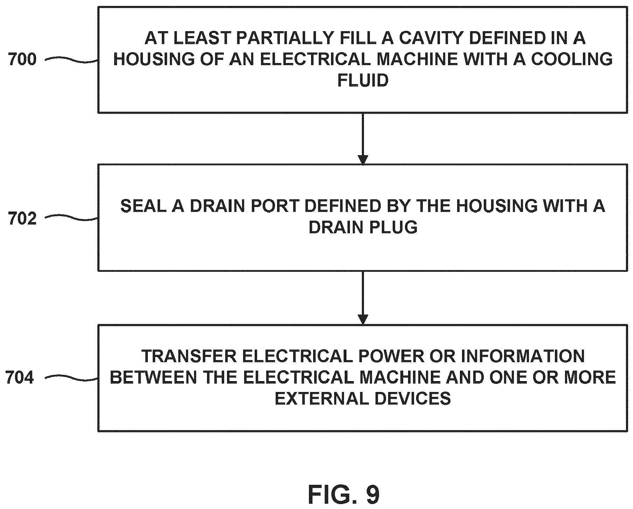

FIG. 9 is a flowchart illustrating examples techniques for operating an electrical machine with a flooded stator or jacketed stator architecture, according to some examples of the present disclosure. Although described primarily with respect to electrical machine 100 of FIGS. 2 and 3, the illustrated techniques may be performed using other devices (e.g., electrical machine 200 of FIG. 4), and other devices may be used to perform the illustrated techniques.

With concurrent reference to FIGS. 2 and 3, the technique of FIG. 9 includes at least partially filling cavity 104 defined in housing 102 of electrical machine 100 with cooling fluid 108 (700). In some examples, electrical machine 100 may be mounted on wing (14, FIG. 1) of aircraft 10 (FIG. 1). In some examples, housing 102 may define gravity top *T* and gravity bottom *B* when mounted on wing (14, FIG. 1). In some examples, drain port 106 may be defined by housing 102 closer to gravity bottom *B* than gravity top *T*. In some examples, electrical machine 100 may include cooling fluid inlet port 114 and cooling fluid outlet port 116, and at least partially filling the cavity with cooling fluid 108 includes feeding cooling fluid 108 through the cooling fluid inlet port 114 into cavity 104 of housing 102.

The technique of FIG. 9 also includes sealing drain port 106 defined by housing 102 with dual-purpose connector 101 (702). Dual-purpose connector 101 includes both drain plug 110 and electrical connector 112A, which transfers electrical power or information to electrical machine 100. In some examples, electrical connector 112A may be an AC power receptacle. Referring to FIG. 5, in some examples sealing drain port 306 may include positioning intermediate adapter plate 324 of dual-purpose connector 301. As shown in FIG. 6, in some examples, sealing drain port 406 with dual-purpose connector 401 may include positioning piston seal 440. Referring back to FIGS. 2 and 3, in some examples, sealing drain port 106 may include threadably connecting dual-purpose connector 101 to drain port 106.

The technique of FIG. 9 includes transferring, via electrical connector 112A of dual-purpose connector 101, electrical power or information between electrical machine 100 and one or more external devices (704).

The technique of FIG. 9 optionally further includes disconnecting dual-purpose connector 101 from drain port 106 to change cooling fluid 108 while electrical machine 100 is mounted on wing (14, FIG. 1) of aircraft (10, FIG. 1).

In some examples, the technique of FIG. 9 may optionally further include supplying alternating current (AC) to electrical machine 100 through electrical connector 112A of dual-purpose connector 101. In some examples, electrical machine 100 may be an electric propulsion unit (EPU). Cooling fluid 108 may, in some examples, include turbine fluid. In some examples, the technique of FIG. 9 may include flowing cooling fluid 108 through cooling fluid channel (546, FIG. 8) defined in dual-purpose connector 101. In some examples, the technique of FIG. 9 may further include connecting, with spring connection (548, FIG. 7) an electrical harness or cable to dual-purpose connector (501, FIG. 7).

Various examples have been described. These and other examples are within the scope of the following clauses and claims.

Example 1: An electrical machine includes a housing defining a cavity and a drain port, wherein the housing is configured to retain a cooling fluid within the cavity; and a dual-purpose connector, wherein dual-purpose connector comprises both a drain plug configured to seal the drain port and an electrical connector configured to transfer electrical power or information to the electrical machine.

Example 2: The electrical machine of example 1, wherein the electrical machine is configured to be mounted on a wing of an aircraft.

Example 3: The electrical machine of example 2, wherein the housing defines a gravity top and a gravity bottom when mounted on the wing, and wherein the drain port is closer to the gravity bottom than the gravity top.

Example 4: The electrical machine of example 3, wherein the dual purpose connector is configured to be removed or disconnected from the drain port to change the cooling fluid while the electrical machine is mounted on the wing of the aircraft.

Example 5: The electrical machine of example 3 or example 4, further comprising a cooling fluid inlet port and a cooling fluid outlet port, wherein the cooling fluid inlet port and cooling fluid outlet port are different than the drain port.

Example 6: The electrical machine of example 5, wherein the cooling fluid inlet port and the cooling fluid outlet port are closer to the gravity top than the gravity bottom.

Example 7: The electrical machine of any of examples 1-6, wherein the electrical connector is an alternating current (AC) power receptacle.

Example 8: The electrical machine of any of examples 1-7, wherein electrical machine is an electric propulsion unit (EPU) configured to propel an aircraft.

Example 9: The electrical machine of any of examples 1-8, wherein the cooling fluid is turbine fluid.

Example 10: The electrical machine of any of examples 1-9, wherein the dual-purpose connector comprises an intermediate adapter plate.

Example 11: The electrical machine of any of examples 1-9, wherein the dual-purpose connector comprises a piston seal.

Example 12: The electrical machine of any of examples 1-11, wherein the dual-purpose connector comprises a cooling fluid channel configured to allow cooling fluid to flow through the dual-purpose connector into the cavity.

Example 13: The electrical machine of any of examples 1-12, wherein the dual-purpose connector and drain port are configured to threadably connect.

Example 14: The electrical machine of any of examples 1-9, wherein the dual-purpose connector includes a spring connection configured to connect the dual-purpose connector to an electrical harness or cable.

Example 15: A method includes at least partially filling a cavity defined in a housing of an electrical machine with a cooling fluid; sealing a drain port defined by the housing with a dual-purpose connector, wherein the dual-purpose connector comprises both a drain plug and an electrical connector; and transferring, via the electrical connector of the dual-purpose connector, electrical power or information between the electrical machine and one or more external devices.

Example 16: The method of example 15, wherein the electrical machine is mounted on a wing of an aircraft.

Example 17: The method of any of examples 15 or 16, wherein the housing defines a gravity top and a gravity bottom when mounted on the wing, and wherein the drain port is closer to the gravity bottom than the gravity top.

Example 18: The method of example 17, further comprising disconnecting the dual-purpose connector from the drain port to drain the cooling fluid while the electrical machine is mounted on the wing of the aircraft.

Example 19: The method of example 17 or 18, wherein the electrical machine comprises a cooling fluid inlet port and a cooling fluid outlet port, and at least partially filling the cavity with cooling fluid comprises feeding cooling fluid through the cooling fluid inlet port.

Example 20: The method of example 19, wherein the cooling fluid inlet port and the cooling fluid outlet port are closer to the gravity top than the gravity bottom.

Example 21: The method of any of examples 16-20, further includes receiving, by the electrical machine and via the electrical connector of the dual-purpose connector, electrical energy; and propelling, by the electrical machine and using the received electrical energy, the aircraft.

Example 22: The method of any of examples 15-21, wherein electrical machine is an electric propulsion unit (EPU).

Example 23: The method of any of examples 15-22, wherein the cooling fluid is turbine fluid.

Example 24: The method of any of examples 15-23, wherein sealing the drain port comprises positioning an intermediate adapter plate of the dual-purpose connector.

Example 25: The method of any of examples 15-23, wherein sealing the drain port comprises positioning a piston seal of the dual-purpose connector.

Example 26: The method of any of examples 15-23, further comprising flowing cooling fluid through a cooling fluid channel defined in the dual-purpose connector.

Example 27: The method of any of examples 15-23, wherein sealing the drain port comprises threadably connecting the dual-purpose connector to the drain port.

Example 28: The method of any of examples 15-23, further comprising connecting, with a spring connection, an electrical harness or cable to the dual-purpose connector.

## Claims

1. An electrical machine comprising:
a housing defining a cavity and a drain port, wherein the housing is configured to retain a cooling fluid within the cavity; and
a dual-purpose connector, wherein dual-purpose connector comprises both a drain plug configured to seal the drain port and an electrical connector configured to transfer electrical power or information to the electrical machine.

2. The electrical machine of claim 1, wherein the electrical machine is configured to be mounted on a wing of an aircraft.

3. The electrical machine of claim 2, wherein the housing defines a gravity top and a gravity bottom when mounted on the wing, and wherein the drain port is closer to the gravity bottom than the gravity top.

4. The electrical machine of any of claims 1-3, wherein the dual purpose connector is configured to be removed or disconnected from the drain port to change the cooling fluid while the electrical machine is mounted on the wing of the aircraft.

5. The electrical machine of any of claims 1-4, further comprising a cooling fluid inlet port and a cooling fluid outlet port, wherein the cooling fluid inlet port and cooling fluid outlet port are different than the drain port.

6. The electrical machine of claim 5, wherein the cooling fluid inlet port and the cooling fluid outlet port are closer to the gravity top than the gravity bottom.

7. The electrical machine of any of claims 1-6, wherein the electrical connector is an alternating current (AC) power receptacle.

8. The electrical machine of any of claims 1-7, wherein electrical machine is an electric propulsion unit (EPU) configured to propel an aircraft.

9. The electrical machine of any of claims 1-8, wherein the cooling fluid is turbine fluid.

10. The electrical machine of any of claims 1-9, wherein the dual-purpose connector comprises an intermediate adapter plate.

11. The electrical machine of any of claims 1-10, wherein the dual-purpose connector comprises a piston seal.

12. The electrical machine of any of claims 1-11, wherein the dual-purpose connector comprises a cooling fluid channel configured to allow cooling fluid to flow through the dual-purpose connector into the cavity.

13. The electrical machine of any of claims 1-12, wherein the dual-purpose connector and drain port are configured to threadably connect.

14. The electrical machine of any of claims 1-13, wherein the dual-purpose connector includes a spring connection configured to connect the dual-purpose connector to an electrical harness or cable.

15. A method comprising:
at least partially filling a cavity defined in a housing of an electrical machine with a cooling fluid;
sealing a drain port defined by the housing with a dual-purpose connector,
wherein the dual-purpose connector comprises both a drain plug and an electrical connector; and
transferring, via the electrical connector of the dual-purpose connector, electrical power or information between the electrical machine and one or more external devices.
